# FASCICULE DE BREVET EUROPEEN

(11) **EP 2 960 671 B1**
(45) Date de publication et mention de la délivrance du brevet: **09.11.2016**
(21) Numéro de dépôt: 15172811.0
(22) Date de dépôt: 19.06.2015
(51) Int. Cl.: G01S 3/46, G01S 13/76, G01S 13/91

(54) **RADAR SECONDAIRE**
SEKUNDÄRRADAR
SECONDARY RADAR

(30) Priorité: 26.06.2014 FR 1401425
(43) Date de publication de la demande: 30.12.2015
(73) Titulaire: THALES, 92400 Courbevoie (FR)
(72) Inventeur: Billaud, Philippe chez THALES AIR SYSTEMS, 91470 Limours (FR); Dupont, Léon, 91470 Angervilliers (FR)
(74) Mandataire: Lucas, Laurent Jacques

(56) Documents cités:
- EP-A1- 0 577 520
- WO-A2-01/86319
- FR-A1- 2 965 063

## Description

La présente invention concerne un radar secondaire, elle s'applique notamment pour sécuriser le trafic aérien à l'approche des aéroports.

L'accroissement du trafic en approche des aéroports induit un rapprochement des avions. Dans la phase d'approche d'aéroport, les avions se resserrent tout naturellement et les écarts d'altitude entre les avions diminuent. Une erreur de mesure d'altitude peut donc avoir des conséquences graves. En radar secondaire, l'altitude d'un avion est transmise au radar via le code C par le transpondeur de l'avion. C'est donc une information reçue par l'interrogateur et non une mesure classiquement effectuée par un radar primaire. Cette information peut donc être entachée d'erreur. Cependant, le mode S avec son code correcteur d'erreur en limite la probabilité d'occurrence.

Néanmoins, l'altitude est une mesure faite à bord de l'avion par l'altimètre à partir de la pression atmosphérique. Suivant la phase du vol, approche ou en route, le pilote compense la valeur de l'altimètre par la pression standard 1013.2 mbar (en route) ou la pression QNH (en approche). Il en résulte la possibilité d'erreur humaine, de la part du pilote, ou d'erreur matérielle, de la part de l'altimètre notamment. Les sources d'erreur peuvent en fait être multiples : erreur sur la pression de référence, erreur sur la saisie de la pression de référence, mauvaise mesure barométrique locale, défaut de fonctionnement de la sonde notamment.

Il est à noter qu'en fonction de la pression atmosphérique locale, une incertitude réelle allant par exemple jusqu'à +/- 400 mètres peut survenir. Ainsi, un problème technique à résoudre est de sécuriser l'information transmise par un avion en mode C à partir de la pression atmosphérique mesurée par l'altimètre de bord.

Un document EP 0 577 520 divulgue une antenne secondaire fonctionnant en mode S. Un document WO 01/86319 divulgue un système de suivi de véhicules.

Un but de l'invention est notamment de résoudre ce problème technique, de façon fiable et économique. A cet effet, l'invention a pour objet un radar secondaire, comportant au moins :
- une antenne secondaire composée d'un ensemble de colonnes d'éléments rayonnants placées chacune dans un plan vertical, ladite antenne comportant un circuit de répartition hyperfréquence verticale, par colonne, des signaux reçus par les éléments rayonnants 19 de ladite colonne et un circuit de répartition hyperfréquence horizontale des colonnes pour former une voie somme (Σ) et une voie différence en azimut (Δ_AZI) ;
- des moyens d'émission et des moyens de génération de signaux d'interrogation, lesdits signaux étant transmis via la dite antenne vers une cible ;
- des moyens de réception et des moyens de traitement des signaux reçus via ladite antenne en réponse auxdits signaux d'interrogation, lesdits moyens de traitement calculant la localisation en azimut de ladite cible à partir des signaux reçus par les voies somme et différence en azimut, une information d'altitude de ladite cible étant codée dans les signaux reçus ;
ledit radar fournissant une information supplémentaire d'altitude sans consommation de ressources système ne perte de performances du fait qu'il comporte en outre un circuit de répartition hyperfréquence combinant :
- la répartition hyperfréquence verticale des signaux issus des éléments rayonnants par sommation pondérée en amplitude et phase pour former un signal différence en élévation (Δ_ELEV') par colonne et ;
- la répartition hyperfréquence horizontale des signaux différence en élévation (Δ_ELEV') des différentes colonnes reçus par leurs éléments rayonnants, par sommation pondérée en amplitude et phase afin de former une voie différence en élévation (Δ_ELEV) dans la direction du faisceau de ladite antenne ;
- l'implantation desdits circuits de distribution hyperfréquence sur ladite antenne, une galette RF de joint tournant transmettant les signaux de ladite voie différence en élévation vers des circuits de réception dédiés à ladite voie ;
les moyens de traitement calculant l'altitude de ladite cible à partir de la comparaison des signaux reçus par ladite voie Somme (Σ) et par ladite voie différence en élévation (Δ_ELEV) considérant la distance mesurée de la cible.

L'information supplémentaire d'altitude est par exemple fournie quel que soit le protocole d'interrogation en mode synchrone, SSR, Mode S ou IFF.

Dans un mode de réalisation possible, les moyens de traitement comparent, lorsqu'elle existe dans un message plot radar, la valeur d'altitude donnée par ladite information supplémentaire transmise par le signal reçu via un code C avec la valeur d'altitude calculée, une indication d'erreur potentielle en altitude étant émis lorsque ladite différence entre les deux valeurs est supérieure à un seuil donné lors de la détection d'une cible tel qu'un message plot radar. Une alerte est par exemple émise pour une cible donnée lorsque l'occurrence de ladite différence est supérieure au seuil donné au-delà d'un nombre donné de tours d'antennes consécutifs.

Ledit radar comporte par exemple des moyens de détection aptes à exploiter la différence en azimut ou en élévation des réponses issues de deux cibles proches pour valider la présence desdites cibles.

Avantageusement, il comporte une voie CONT supplémentaire pour la validation de l'information d'altitude parmi les informations ADSB considérant la distance transmise par ladite cible.

D'autres caractéristiques et avantages de l'invention apparaîtront à l'aide de la description qui suit, faite en regard de dessins annexés qui représentent :
- la figure 1, une architecture d'un radar secondaire selon l'art antérieur ;
- les figures 2a, 2b et 2c, un mode d'obtention des voies somme et différence en azimut selon l'art antérieur ;
- la figure 3, un exemple d'architecture d'un radar secondaire selon l'invention ;
- les figures 4a et 4b, un exemple d'antenne secondaire avec un mode d'obtention possible des voies somme et différence en élévation ;
- la figure 5, une illustration des diagrammes d'antenne somme et différences en élévation ;
- la figure 6, un exemple d'exploitation d'un radar selon l'invention.

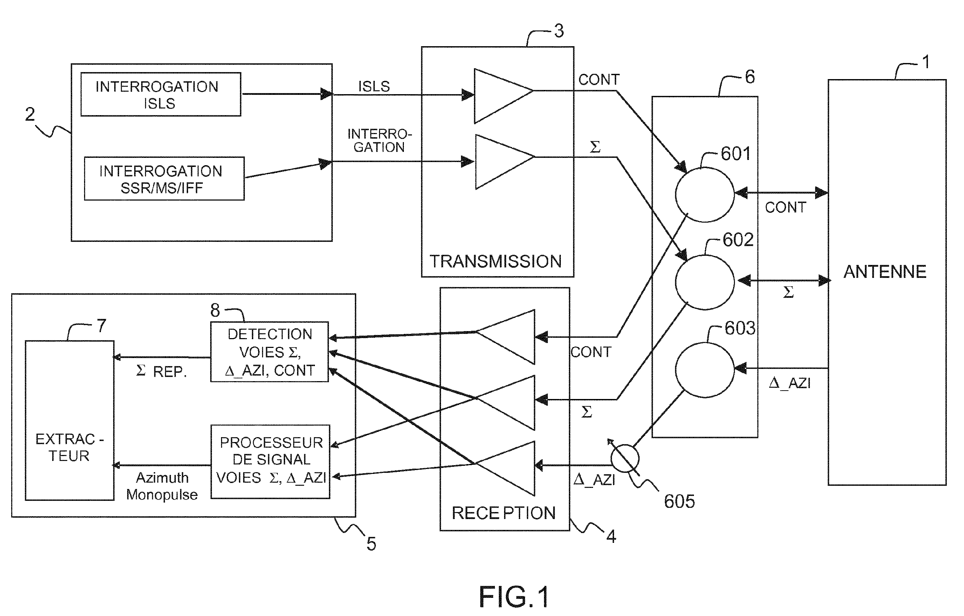

La figure 1 illustre l'architecture d'un radar secondaire selon l'art antérieur. Le radar comporte une antenne SSR 1, ou IFF par exemple, constituée par des barreaux, ou colonnes, parallèles situés sensiblement dans un plan vertical, chaque barreau étant lui-même constitué par des éléments rayonnants. Dans un mode de réalisation typique, l'antenne comporte 35 colonnes, chaque colonne 10 comportant 11 éléments rayonnants. On constitue ainsi une antenne à large ouverture verticale, dite LVA (« large vertical aperture »), présentant une largeur de l'ordre de 9 mètres, et une hauteur de l'ordre d'un mètre.

L'antenne 1 assure le rayonnement des interrogations, à 1030 MHz, et la captation des réponses, à 1090 MHz, issues des transpondeurs à bord des aéronefs.

Les autres unités composant le radar sont notamment les suivantes :
- une unité 2 de gestion spatio-temporelle, générant les interrogations secondaire mode S en fonction des tâches à effectuer avec les cibles prédites présentes dans le lobe principal, cette entité élabore notamment les interrogations SSR, MS et IFF ainsi que les interrogations ISLS ;
- un émetteur 3, convertissant en signaux RF de forte puissance les interrogations à rayonner par l'antenne 1 ;
- un récepteur 4, démodulant les signaux RF reçus par l'antenne 1 ;
- une unité 5 de traitement des signaux et des données, détectant et décodant les réponses reçues dans le lobe principal de l'antenne ;
- une unité RF 6 assurant le transfert des signaux RF depuis et vers les diagrammes d'antenne, à cet effet elle comporte classiquement des circulateurs hyperfréquence 601, 602, 603 aiguillant les signaux de transmission et de réception vers et depuis l'antenne.

Dans les radars actuels, classiquement les diagrammes utilisés sont :
- En émission, les diagrammes somme Σ et contrôle CONT, pour l'interrogation des avions dans le lobe principal de l'antenne ;
- En réception, les diagrammes somme Σ et contrôle CONT pour la détection des réponses dans le lobe principal et la voie différence en azimut Δ_AZI pour la localisation fine de la cible dans le lobe principal de l'antenne. La voie Δ_AZI peut aussi être utilisée pour la détection en cas de réponses emmêlées.

Les principales fonctions de l'unité RF 6 sont les circulateurs 601, 602, 603 et classiquement le déphaseur 605 permettant la mise en phase des signaux reçus sur les diagrammes somme Σ et différence en azimut Δ_AZI.

Une fois transposés en bande de base par le récepteur 4, les signaux issus des voies somme Σ, CONT (quelquefois Δ_AZI) sont exploités par l'unité 5 de traitement du signal pour détecter les réponses des transpondeurs présents dans le lobe principal, puis pour établir pour chaque réponse le dépointage de la réponse dans le lobe principal en azimut. Ceci est réalisé en exploitant les signaux de la voie somme Σ et simultanément ceux issus de la voie différence Δ_AZI, par la fonction dénommée classiquement « monopulse en azimut ».

Au niveau du traitement des données 5, les réponses reçues sont assemblées pour constituer un plot et la position azimutale de la cible ainsi détectée est calculée à partir de la position de l'axe de l'antenne et du dépointage de chaque réponse (monopulse d'azimut) retenue pour constituer le plot.

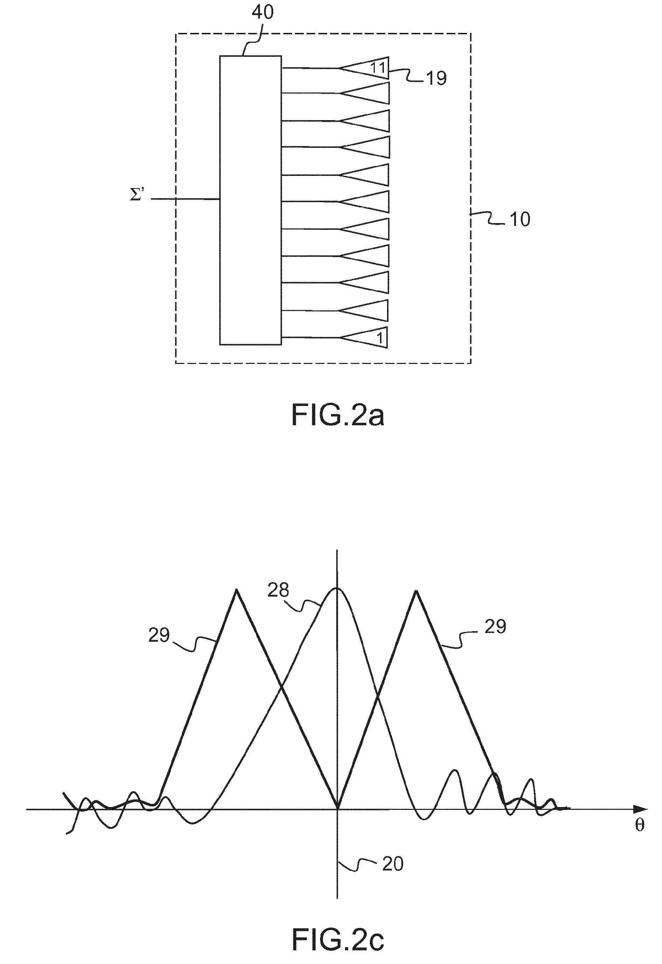

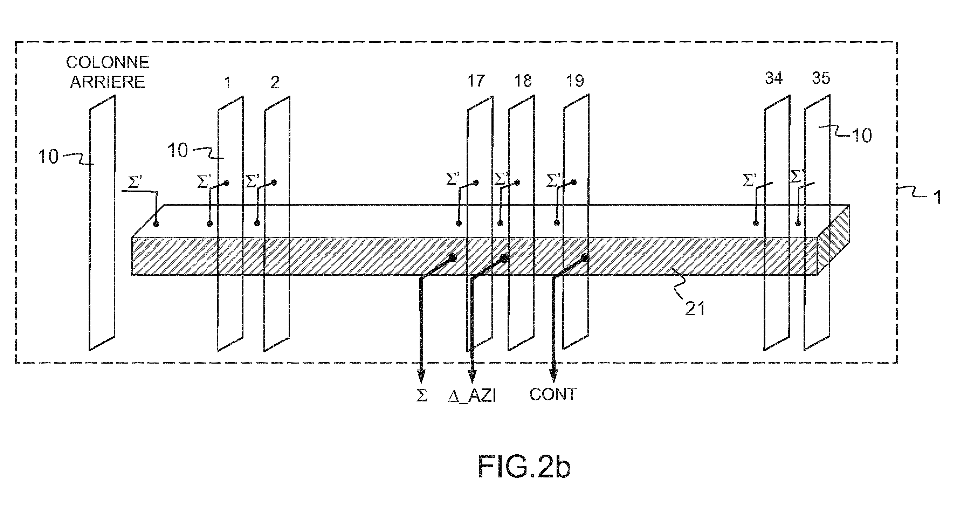

Les figures 2a, 2b et 2c illustrent un mode d'obtention possible des voies sommes Σ et différence en azimut Δ_AZI selon l'art antérieur.

La figure 2a illustre la formation du lobe en élévation Σ'. Plus particulièrement elle représente une colonne 10 d'éléments rayonnants 19 et un répartiteur vertical 40, ou circuit de distribution hyperfréquence. Les éléments rayonnant 19 sont connectés au répartiteur 40. Ce dernier réalise le lobe en élévation Σ' par pondération en amplitude et phase des signaux de chaque élément rayonnant 19. Un signal Σ' est ainsi réalisé pour chaque colonne 10.

La figure 2b illustre la réalisation des diagrammes somme Σ, différence en azimut Δ_AZI et contrôle CONT. Ces diagrammes sont réalisés classiquement au moyen d'un répartiteur horizontal 21, à partir des signaux Σ' des 35 colonnes pondérés en amplitude et en phase et de la colonne arrière pour la voie CONT.

La figure 2c présente par deux courbes 28, 29 les diagrammes d'antenne en fonction de l'angle d'azimut θ. Une première courbe 28 représente le diagramme somme Σ dont le maximum correspond à la direction de la normale 20 à l'antenne au niveau de la colonne centrale, ce diagramme Σ étant symétrique par rapport à la normale 20. Une deuxième courbe 29 représente la voie différence Δ_AZI en azimut, symétrique par rapport à la normale 20 de l'antenne, présentant une valeur sensiblement nulle dans la direction de la normale. Comme cela est bien connu, la voie différence Δ_AZI permet de localiser précisément les cibles en azimut dans le lobe principal de l'antenne (fonction appelée monopulse d'azimut).

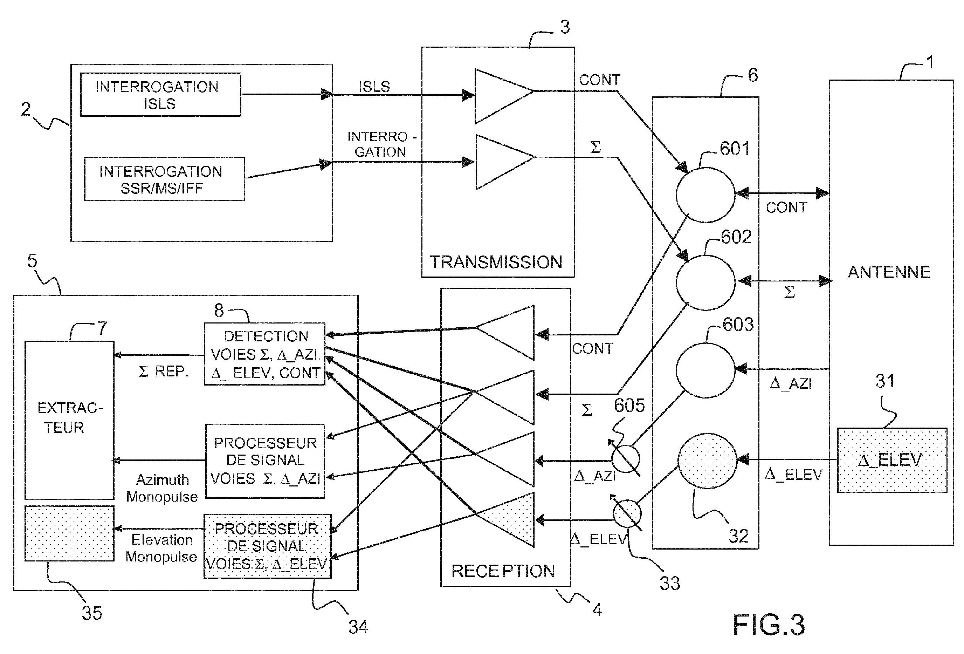

La figure 3 illustre une architecture possible d'un radar selon l'invention. Avantageusement, l'invention utilise la dimension verticale de l'antenne secondaire 1, c'est-à-dire sa hauteur, pour former une voie différence en élévation. La hauteur est suffisante pour effectuer une mesure d'élévation d'une précision suffisante , en utilisant le dispositif selon l'invention, pour effectuer des mesures d'altitude des avions à l'approche des aéroports afin de valider les informations d'altitude, attendues par le contrôleur ATC en fonction des consignes de correction de pression 1013.2 mbar ou QNH, transmises via le code C ou tout autre message.

Plus précisément, avantageusement, un radar selon l'invention effectue une mesure de l'élévation d'un avion à partir des mêmes réponses que celles utilisées pour la détection et le décodage du code C en SSR comme en mode S comme en IFF. Il n'y a donc pas de transaction supplémentaire pour accroître la fiabilité de l'information de code C, puisque c'est le signal véhiculant ce code C qui est exploité pour effectuer les mesures d'élévation. Cette mesure est effectuée sur la base d'une fonction monopulse d'élévation, de manière totalement analogue à la fonction monopulse d'azimut. Ainsi, chaque réponse reçue de la cible, l'avion, quel que soit son contenu (code A, code C, message mode S, identification IFF notamment), permet de mesurer l'élévation de la cible. Le radar fournit une information supplémentaire d'altitude sans consommation de ressources système ni perte de performance, cette information d'altitude étant fournie quel que soit le protocole d'interrogation en mode synchrone, SSR, Mode S ou IFF.

L'architecture radar de la figure 3 reprend les éléments de l'architecture radar de la figure 1 en ajoutant les éléments nécessaires à la réalisation de la voie différence en élévation. Les fonctions classiques d'un radar secondaire, telles que décrites relativement à la figure 1 ne sont pas modifiées, la fonction de mesure en élévation est ajoutée en parallèle des fonctions existantes. Les éléments à ajouter sont décrits ci-après.

Un nouveau répartiteur horizontal 31, réalisé sur l'antenne, permet de former le diagramme différence en élévation Δ_ELEV.

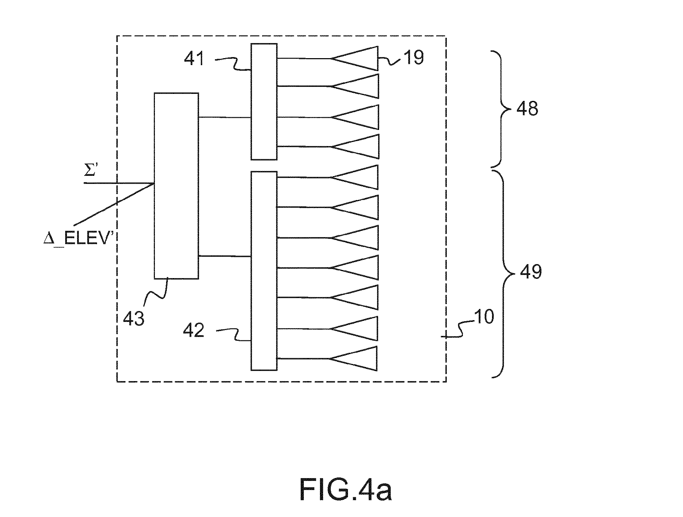

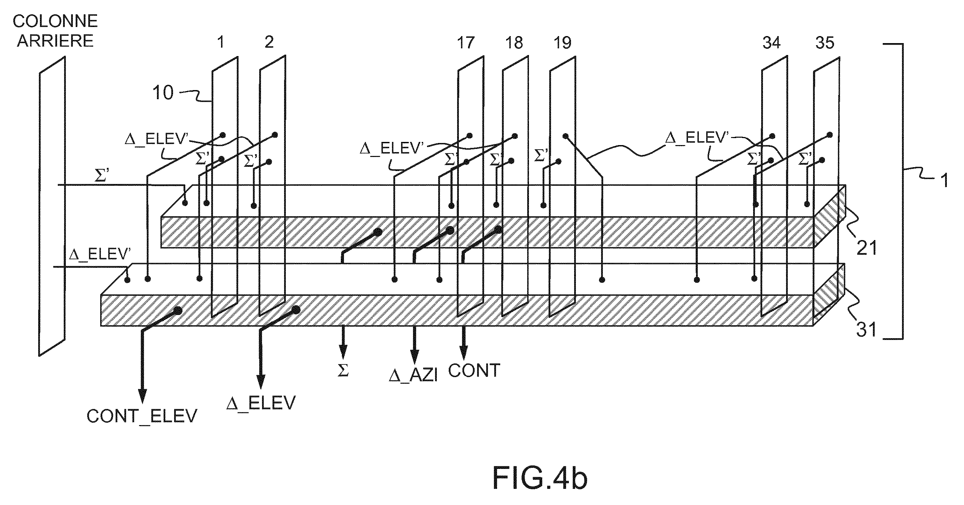

Les figures 4a et 4b illustrent la réalisation de ce diagramme différence en élévation.

La figure 4a présente une même colonne 10 d'éléments rayonnants 19 que celle de la figure 2a, mais selon l'invention, les éléments rayonnants 19 sont maintenant répartis en deux groupes 48, 49 pour former une voie différence en élévation Δ_ELEV'. A cet effet, un premier groupe 48 comporte par exemple quatre éléments rayonnants reliés à un premier répartiteur 41 et un deuxième groupe 49 comporte par exemple sept éléments rayonnants reliés à un deuxième répartiteur 42. Les sorties de ces répartiteurs 41, 42 sont elles-mêmes reliées à un troisième répartiteur 43. Ces répartiteurs 41,42, 43 permettent de réaliser le même diagramme somme Σ' en élévation et le diagramme différence en élévation Δ_ELEV' par pondération en amplitude et en phase des signaux de chaque élément rayonnant 19. Avantageusement, il n'est ainsi pas nécessaire de modifier l'architecture existante.

La figure 4b illustre la formation du diagramme différence en élévation Δ_ELEV. Plus particulièrement, la figure 4b présente le premier répartiteur horizontal 21 déjà présenté relativement à la figure 2b et le nouveau répartiteur 31. Comme dans l'architecture présentée à la figure 2b, le premier répartiteur réalise les diagrammes somme Σ, différence en azimut Δ_AZI et de contrôle CONT. Le deuxième répartiteur 31 réalise le diagramme Δ_ELEV à partir des signaux Δ_ELEV' des 35 colonnes pondérées en amplitude et en phase selon une loi quasi identique à celle appliquée dans le répartiteur 21 pour le diagramme Σ.

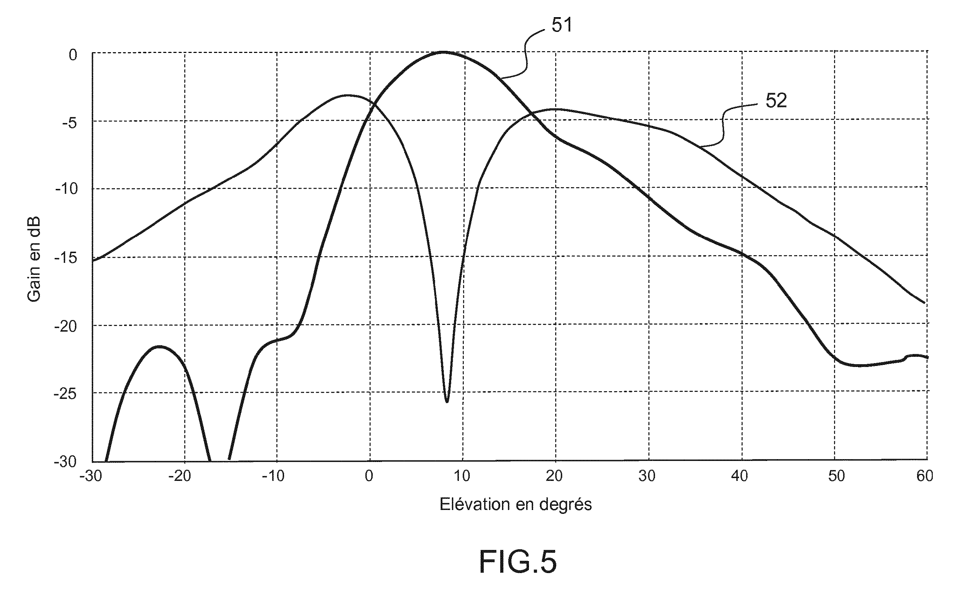

La figure 5 illustre des diagrammes d'antenne obtenus au moyen de ce répartiteur supplémentaire 31, par des courbes représentatives du gain d'antenne. Une première courbe 51 représente le diagramme somme Σ' quasi identique à celle obtenue avec le dispositif 2a et une deuxième courbe 52 représente le diagramme différence en élévation Δ_ELEV.

On revient à la figure 3. Le nouveau répartiteur horizontal 31 étant placé sur l'antenne, une galette RF supplémentaire, non représentée, est prévue au niveau du joint tournant pour transférer les signaux hyperfréquence entre l'antenne 1 et le reste des circuits qui sont fixes.

Un circulateur 32 permet d'aiguiller les signaux de la voie Δ_ELEV, en réception vers le traitement.

Un déphaseur 33 assure la mise en phase des signaux émis sur la voie somme Σ et sur la voie différence Δ_ELEV. Les signaux de la voie Δ_ELEV sont aussi transposés en bande de base par les moyens de réception 4.

Au niveau du traitement du signal 5, les réponses détectées sont désormais enrichies, en plus du dépointage en azimut, de la réponse dans le lobe principal, de la réponse dans le lobe principal en élévation en exploitant les signaux de la voie somme Σ et simultanément ceux issus de la voie différence Δ_ELEV, par la fonction de type monopulse, que l'on peut nommer monopulse d'élévation 34 par similitude avec la fonction classique de monopulse en azimut.

Les réponses reçues, assemblées par l'extracteur 7 au niveau du traitement du signal pour constituer le plot, servent désormais aussi pour constituer 35 l'élévation de la cible ainsi mesurée à partir du dépointage dans le lobe principal en élévation de chaque réponse retenue pour constituer le plot.

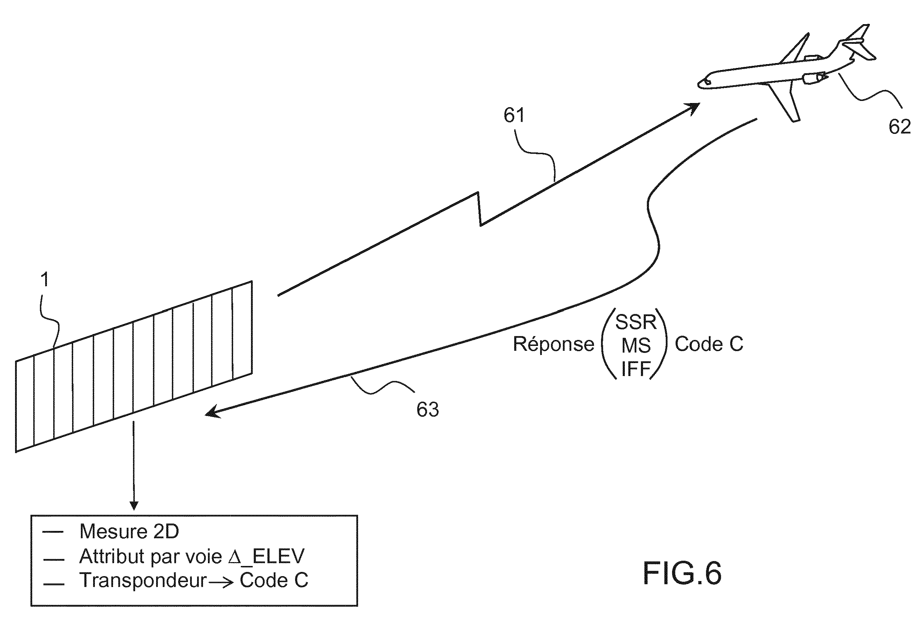

La figure 6 illustre un aspect du traitement effectué par un radar selon l'invention. Un signal d'interrogation 61 est émis via l'antenne 1. En réponse, un avion 62 renvoie, via son transpondeur, une réponse 63 de type SSR, Mode S ou IFF notamment, la plupart des réponses contenant le code C véhiculant l'information d'altitude barométrique. Cette réponse est captée par l'antenne 1. Les signaux reçus sont transmis vers les moyens de traitement comme décrit précédemment. Classiquement, les moyens de traitement effectuent une mesure 2D de la position de l'avion (distance et azimut), à partir notamment du diagramme somme et de la position azimutale du faisceau principal de l'antenne complétée par la mesure issue du diagramme différence en azimut Δ_AZI. Selon l'invention, les moyens de traitement élaborent un attribut à la réponse reçue, cet attribut donnant une information d'altitude de l'avion grâce à l'exploitation du diagramme différence en élévation Δ_ELEV.

Le radar effectue ainsi une mesure de l'altitude de l'avion à partir des mêmes réponses que celles utilisées pour la détection en SSR comme en mode S ou IFF. Comme indiqué précédemment, il n'y a donc pas de transaction supplémentaire pour accroître la fiabilité de l'information de code C, mais en plus il y a synchronisation puisque c'est le signal véhiculant ce code C qui est exploité pour effectuer les mesures d'élévation.

L'information d'altitude obtenue par la mesure de la distance et l'élévation Δ_ELEV de la cible peut être comparée à l'information d'altitude transmise par le code C, décodée par ailleurs, et provenant de l'altimètre de l'avion. Pour comparer l'altitude transmise via le code C et l'altitude calculée au moyen de la voie différence en élévation, les moyens de traitement comparent la différence entre les altitudes à un seuil donné caractérisant l'apparition d'une erreur potentielle d'altitude pouvant être indiquée dans le message plot que délivre le radar pour chaque cible détectée.

L'invention permet donc avantageusement, avec un très faible surcoût de matériel, de sécuriser l'information d'altitude transmise depuis l'avion. La faible hauteur de l'antenne secondaire 1 ne permet pas d'obtenir une information précise en altitude, mais cette précision est suffisante pour confirmer l'information d'altitude fournie par les avions, notamment à l'approche des aéroports où la précision est alors suffisante.

Pour valider l'information d'altitude transmise par une cible donnée, on peut prendre en compte des mesures effectuées avec celle-ci sur plusieurs tours d'antenne. En particulier, pour valider une fausse information d'altitude fournie par le code C, différente de l'altitude mesurée par le radar, les moyens de traitement du radar vérifient cette différence sur plusieurs tours d'antenne. En cas de confirmation de l'erreur, une alerte peut être transmise au pilote par le contrôle aérien, pour ordonner par exemple au pilote de changer d'altimètre ou vérifier la prise en compte de la consigne du contrôleur (1013.2 mbar ou QNH). Toute autre action pouvant être prise par ailleurs.

L'information d'élévation ayant une précision suffisante à l'approche des aéroports, l'invention permet par ailleurs d'améliorer la résolution de cibles proches en détectant aussi les cibles sur le diagramme différence en élévation Δ_ELEV comme cela est fait actuellement sur certain traitements radars SRR, mode S ou IFF avec le diagramme en azimut. En effet, deux réponses emmêlées (distances proches) si elles sont de même niveau de signal ne sont pas distinguables sur la voie de détection Σ. En revanche, si les avions qui sont les sources de ces réponses présentent une différence suffisante en azimut ou en élévation, de par la forme de ces deux diagrammes présentant un zéro au centre du lobe (représenté par la deuxième courbe 52 de la figure 5), les réponses issues des diagrammes différence azimut Δ_AZI et/ou élévation Δ_ELEV sont alors de niveaux différents ce qui permet alors de les détecter. En référence à la figure 5, les moyens de détection 8 du radar exploitent alors la différence de niveau apportée par le zéro au centre du lobe Δ_ELEV, représenté par la deuxième courbe 52.

De plus, si le radar intègre la fonction de réception des messages asynchrone du radar émis périodiquement par les cibles équipés de transpondeurs Mode S et IFF (dénommés dans la littérature : squitters) ADS-B par les diagrammes d'antennes actuels Σ et CONT, le diagramme différence en élévation Δ_ELEV peut être reproduit à l'identique de celui de la voie Σ, cette fois pour la voie CONT en exploitant cette fois en plus le dipôle arrière et ainsi permettre de mesurer de manière tout à fait similaire l'élévation du squitter ADS-B de manière analogue et donc de pouvoir vérifier la cohérence entre l'information d'altitude barométrique ou GPS qu'il transmet avec la valeur mesurée par le radar.

Moyennant une voie CONT supplémentaire dans le radar, l'invention est applicable à la validation de l'information d'altitude parmi les informations ADSB considérant la distance transmise par la cible.

## Revendications

1. Radar secondaire, comportant au moins :
- une antenne secondaire (1) composée d'un ensemble de colonnes (10) d'éléments rayonnants (19) placées chacune dans un plan vertical, ladite antenne comportant un circuit (40) de répartition hyperfréquence verticale, par colonne, des signaux reçus par les éléments rayonnants 19 de ladite colonne et un circuit (21) de répartition hyperfréquence horizontale des colonnes (10) pour former une voie somme (Σ) et une voie différence en azimut (Δ_AZI) ;
- des moyens d'émission (3, 6) et des moyens (2) de génération de signaux d'interrogation (61), lesdits signaux étant transmis via la dite antenne (1) vers une cible (62) ;
- des moyens de réception (4, 6) et des moyens de traitement (5) des signaux reçus (63) via ladite antenne (1) en réponse auxdits signaux d'interrogation (61), lesdits moyens de traitement (50) calculant la localisation en azimut de ladite cible (62) à partir des signaux reçus par les voies somme et différence en azimut, une information d'altitude de ladite cible étant codée dans les signaux reçus (63) ;
**caractérisé en ce que**, pour fournir une information supplémentaire d'altitude sans consommation de ressources système ni perte de performances, ledit radar comporte en outre un circuit de répartition hyperfréquence (31) combinant :
- la répartition hyperfréquence verticale des signaux issus des éléments rayonnants (19) par sommation pondérée en amplitude et phase pour former un signal différence en élévation (Δ_ELEV') par colonne (10), et ;
- la répartition hyperfréquence horizontale des signaux différence en élévation (Δ_ELEV') des différentes colonnes (10) reçus par leurs éléments rayonnants (19), par sommation pondérée en amplitude et phase afin de former une voie différence en élévation (Δ_ELEV) dans la direction du faisceau de ladite antenne ;
- l'implantation desdits circuits de distribution hyperfréquence (31, 41, 42, 43) sur ladite antenne, une galette RF de joint tournant transmettant les signaux de ladite voie différence en élévation vers des circuits de réception (32, 33, 4) dédiés à ladite voie ;
les moyens de traitement (5) calculant l'altitude de ladite cible à partir de la comparaison (4) des signaux reçus par ladite voie Somme (Σ) et par ladite voie différence en élévation (Δ_ELEV) considérant la distance mesurée sur ladite cible.

2. Radar secondaire selon la revendication 1, **caractérisé en ce que** ladite information supplémentaire d'altitude est fournie quel que soit le protocole d'interrogation en mode synchrone, SSR, Mode S ou IFF.

3. Radar secondaire selon la revendication 2, **caractérisé en ce que** les moyens de traitement (5) comparent, lorsqu'elle existe dans un message plot radar, la valeur d'altitude donnée par ladite information transmise par le signal reçu via un code C avec la valeur d'altitude calculée (4), une indication d'erreur potentielle en altitude étant émise lorsque ladite différence entre les deux valeurs est supérieure à un seuil donné lors de la détection d'une cible et **en ce qu'**une alerte est émise pour une cible donnée lorsque l'occurrence de ladite différence est supérieure au seuil donné au-delà d'un nombre donné de tours d'antennes consécutifs.

4. Radar secondaire selon l'une quelconque des revendications précédentes, **caractérisé en ce qu'**il comporte des moyens de détection (8) aptes à exploiter la différence en azimut ou en élévation des réponses issues de deux cibles proches pour valider la présence desdites cibles.

5. Radar secondaire selon l'une quelconque des revendications précédentes, **caractérisé en ce qu'**il comporte une voie CONT supplémentaire pour la validation de l'information d'altitude parmi les informations ADSB considérant la distance transmise par ladite cible.

## Patentansprüche

1. Sekundärradar, das wenigstens Folgendes umfasst:
- eine sekundäre Antenne (1) bestehend aus einem Satz von Spalten (10) von Strahlungselementen (19), die jeweils in einer vertikalen Ebene platziert sind, wobei die Antenne eine Schaltung (40) für eine spaltenweise vertikale Mikrowellenverteilung der von den Strahlungselementen (19) der Spalte empfangenen Signale und eine Schaltung (21) für die horizontale Mikrowellenverteilung der Spalten (10) umfasst, um einen Summenkanal (Σ) und einen Azimut-Differenzkanal (Δ_AZI) zu bilden;
- Sendemittel (3, 6) und Mittel (2) zum Erzeugen von Abfragesignalen (61), wobei die Signale über die Antenne (1) zu einem Ziel (62) gesendet werden;
- Empfangsmittel (4, 6) und Mittel (5) zum Verarbeiten der über die Antenne (1) empfangenen Signale (63) als Reaktion auf die Abfragesignale (61), wobei die Verarbeitungsmittel (50) den Ort des Ziels (62) nach Azimut auf der Basis der durch die Summen- und Azimut-Differenzkanäle empfangenen Signale berechnet, wobei eine Höheninformation des Ziels in den empfangenen Signalen (63) codiert ist,
**dadurch gekennzeichnet, dass** das Radar zum Liefern einer zusätzlichen Höheninformation, ohne Systemressourcen zu verbrauchen oder Leistung zu verlieren, ferner eine Mikrowellenverteilungsschaltung (31) umfasst, die Folendes kombiniert:
- die vertikale Mikrowellenverteilung der von den Strahlungselementen (19) kommenden Signale durch gewichtete Amplituden- und Phasenaddition, um ein Elevationsdifferenzsignal (Δ_ELEV') nach Spalte (10) zu bilden; und
- die horizontale Mikrowellenverteilung der Elevationsdifferenzsignale (Δ_ELEV') der von ihren Strahlungselementen (19) empfangenen verschiedenen Spalten (10) durch gewichtete Amplituden- und Phasenaddition, um einen Elevationsdifferenzkanal (Δ_ELEV) in Richtung des Strahls der Antenne zu bilden;
- Installation der Mikrowellenverteilungsschaltungen (31, 41, 42, 43) an der Antenne, wobei eine Drehgelenk-RF-Scheibe die Signale des Elevationsdifferenzsignals zu dem Kanal dedizierten Empfangsschaltungen (32, 33, 4) sendet;
wobei die Verarbeitungsmittel (5) die Höhe des Ziels auf der Basis des Vergleichs (4) der von dem Summenkanal (Σ) und dem Elevationsdifferenzkanal (Δ_ELEV) empfangenen Signale unter Berücksichtigung der auf dem Ziel gemessenen Distanz berechnen.

2. Sekundärradar nach Anspruch 1, **dadurch gekennzeichnet, dass** die zusätzliche Höheninformation unabhängig vom Abfrageprotokoll im Synchronmodus, SSR, S-Modus oder IFF-Modus bereitgestellt wird.

3. Sekundärradar nach Anspruch 2, **dadurch gekennzeichnet, dass** die Verarbeitungsmittel (5) den Höhenwert, wenn er in einer Radarplot-Nachricht vorliegt und durch die Information angegeben wird, die von dem über einen Code C empfangenen Signal gesendet wird, mit dem berechneten Höhenwert (4) vergleichen, wobei eine Anzeige eines potentiellen Höhenfehlers gesendet wird, wenn die Differenz zwischen den beiden Werten größer ist als eine gegebene Schwelle beim Detektieren eines Ziels, und dadurch, dass eine Benachrichtigung für ein gegebenes Ziel gesendet wird, wenn die auftretende Differenz um mehr als eine gegebene Anzahl von konsekutiven Antennenrotationen größer ist als die gegebene Schwelle.

4. Sekundärradar nach einem der vorherigen Ansprüche, **dadurch gekennzeichnet, dass** es Detektionsmittel (8) umfasst, die die Azimut- oder Elevationsdifferenz der von zwei nahen Zielen kommenden Antworten nutzen können, um die Anwesenheit der Ziele zu bestätigen.

5. Sekundärradar nach einem der vorherigen Ansprüche, **dadurch gekennzeichnet, dass** es einen zusätzlichen Kanal CONT zum Bestätigen der Höheninformation unter den ADSB-Informationen unter Berücksichtigung der von dem Ziel gesendeten Distanz umfasst.

## Claims

1. A secondary radar comprising at least:
- one secondary antenna (1) made up of a set of columns (10) of radiating elements (19) each placed in a vertical plane, said antenna comprising a circuit (40) for vertical microwave distribution, per column, of the signals received by the radiating elements (19) of said column and a circuit (21) for horizontal microwave distribution of the columns (10) so as to form a sum channel (Σ) and an azimuth difference channel (Δ_AZI);
- transmission means (3, 6) and means (2) for generating polling signals (61), said signals being transmitted via said antenna (1) to a target (62);
- reception means (4, 6) and means (5) for processing the signals (63) received via said antenna (1) in response to said polling signals (61), said processing means (50) computing the location of said target (62) by azimuth on the basis of the signals received by the sum and azimuth difference channels, with altitude information of said target being coded in the received signals (63),
**characterised in that**, in order to provide additional altitude information without consuming system resources or losing performance, said radar further comprises a microwave distribution circuit (31) combining:
- the vertical microwave distribution of the signals coming from the radiating elements (19) by weighted amplitude and phase adding so as to form an elevation difference signal (Δ_ELEV') per column (10); and
- the horizontal microwave distribution of the elevation difference signals (Δ_ELEV') of the various columns (10) received by their radiating elements (19) by weighted amplitude and phase adding so as to form an elevation difference channel (Δ_ELEV) in the direction of the beam of said antenna;
- the installation of said microwave distribution circuits (31, 41, 42, 43) on said antenna, a rotary joint RF wafer transmitting the signals from said elevation difference channel to reception circuits (32, 33, 4) dedicated to said channel;
said processing means (5) computing the altitude of said target on the basis of the comparison (4) of the signals received by said sum channel (Σ) and by said elevation difference channel (Δ_ELEV) whilst considering the distance measured on said target.

2. The secondary radar according to claim 1, **characterised in that** said additional altitude information is provided regardless of the polling protocol in synchronous, SSR, S mode or IFF mode.

3. The secondary radar according to claim 2, **characterised in that** the processing means (5) compare the altitude value, if it exists in a radar plot message, which altitude value is given by said information transmitted by the signal received via a code C, to the computed altitude value (4), an indication of potential altitude error being transmitted if said difference between the two values is higher than a given threshold when detecting a target, and **in that** a notification is transmitted for a given target if said occurring difference is higher than the given threshold by more than a given number of consecutive antenna rotations.

4. The secondary radar according to any one of the preceding claims, **characterised in that** it comprises detection means (8) capable of using the azimuth or elevation difference of the responses coming from two near targets so as to confirm the presence of said targets.

5. The secondary radar according to any one of the preceding claims, **characterised in that** it comprises an additional channel CONT for confirming the altitude information from the ADSB information whilst considering the distance transmitted by said target.
